# EUROPÄISCHE PATENTSCHRIFT

(11) **EP 1 218 102 B1**
(45) Veröffentlichungstag und Bekanntmachung des Hinweises auf die Patenterteilung: **02.06.2004**
(21) Anmeldenummer: 00960568.4
(22) Anmeldetag: 31.08.2000
(51) Int. Cl.: B01J 23/26, C08F 10/00

(54) **VERFAHREN ZUM HERSTELLEN VON PHILLIPS-KATALYSATOREN FÜR DIE POLYMERISATION VON OLEFINEN MIT VERBESSERTEN PRODUKTIVITÄTEN IM PARTICLE-FORM-VERFAHREN**
METHOD FOR PRODUCING PHILLIPS CATALYSTS FOR POLYMERISING OLEFINS WITH BETTER PRODUCTIVITY RATES IN THE PARTICLE-FORM PROCESS
PROCEDE DE PREPARATION DE CATALYSEURS PHILLIPS POUR LA POLYMERISATION D'OLEFINES AVEC DES PRODUCTIVITES AMELIOREES LORS DE LA MISE EN OEUVRE DU PROCEDE DE FORMAGE DE PARTICULES

(30) Priorität: 09.09.1999 DE 19943206
(43) Veröffentlichungstag der Anmeldung: 03.07.2002
(73) Patentinhaber: Basell Polyolefine GmbH, 50389 Wesseling (DE)
(72) Erfinder: EVERTZ, Kaspar, 67105 Schifferstadt (DE); FUNK, Guido, 67549 Worms (DE); DE LANGE, Paulus, 50389 Wesseling (DE); KÖLLE, Peter, 67098 Bad Dürkheim (DE); DECKERS, Andreas, 55234 Flomborn (DE)
(86) Internationale Anmeldenummer: PCT/EP2000/008508
(87) Internationale Veröffentlichungsnummer: WO 2001/017676

(56) Entgegenhaltungen:
- WO-A-93/08146
- DE-B- 1 292 636
- US-A- 5 164 353
- US-A- 5 189 123
- US-A- 5 352 658

## Beschreibung

Die vorliegende Erfindung betrifft ein Verfahren zum Herstellen von Phillips-Katalysatoren, bei dem ein Silicagel in einer Suspension mit einer Chromsalzlösung behandelt und anschließend, nach Entfernung des Lösungsmittels, in einer sauerstoffhaltigen Atmosphäre bei Temperaturen oberhalb 300°C calciniert wird.

Ein Verfahren dieser Art ist bekannt und wird z.B. in der Literaturstelle DE-A 25 40 279 ausführlich beschrieben. Die danach hergestellten Katalysatoren werden auch zerkleinert und besitzen Korngrößen im Bereich von 20 bis 2000 µm, insbesondere von 40 bis 300 µm.

In den Veröffentlichungen DE-A 36 40 802 und DE-A 36 40 803 wird beschrieben, dass durch Einschränken des oxidischen Trägers auf eine bestimmte, sehr enge Korngrößenverteilung im Bereich von 50 bis 150 µm Chromtrioxidkatalysatoren erhalten werden, die bei gleicher oder höherer Katalysatorproduktivität Polymerisate mit verbesserter Kornmorphologie liefern.

In der US-PS 5,641,842 schließlich wird festgestellt, dass Phillips-Katalysatoren mit Korngrößen von > 75 µm vorteilhaft für die Morphologie von damit hergestelltem Polyethylen sind.

Nach Auswertung der einschlägigen Literatur ist zusammenfassend festzuhalten, dass durch Klassieren des oxidischen Trägermaterials die Katalysatorproduktivität und die Polyethylenmorphologie beeinflußt werden. Nach den Angaben der Literatur werden im allgemeinen mit gröberen Katalysatoren, d.h. mit Korngrößen von > 50 µm, die besten Ergebnisse erzielt.

Aufgabe der vorliegenden Erfindung war es, ein neues Verfahren anzugeben, mit dem sich Phillips-Katalysatoren herstellen lassen, die die Produktivität der Polymerisation von Ethylen im Loop-Fällungs-Verfahren noch weiter steigern und insbesondere erhöhte Polyethylen-Feststoffgehalte innerhalb des Polymerisationsreaktors erlauben.

Gelöst wird diese Aufgabe durch ein Verfahren der eingangs genannten Gattung, dessen Kennzeichenmerkmale darin zu sehen sind, dass das Silicagel vor der Calcinierung und/oder der Katalysator nach der Calcinierung so lange zerkleinert werden, bis eine mittlere Korngröße von < 100 µm erreicht ist, wobei der Partikelanteil mit einer Korngröße von < 50 µm in Bereich von 30 bis 80% liegt.

Als Silicagel wird erfindungsgemäß ein Silicagel eingesetzt, das einen Feststoffanteil, berechnet als Siliziumdioxid, im Bereich von 10 bis 30 Gew.-% besitzt, vorzugsweise von 11 bis 25 Gew.-%, und das weitgehend kugelförmig ist. Ein solches Silicagel wird erhalten, indem man in einen unter Drall stehenden Strom einer Mineralsäure längs sowie tangential zur Fließrichtung des Stromes eine Lösung enthaltend Natrium- oder Kaliumwasserglas einbringt und das dabei sich bildende Kieselsäurehydrosol in ein gasförmiges Medium tropfenförmig versprüht. Das versprühte Hydrosol erstarrt dann in dem gasförmigen Medium kugelförmig und wird durch Waschen mit Wasser von anhaftenden Salzen befreit.

Das kugelförmige Hydrosol wird danach mit einer organischen Flüssigkeit aus der Reihe der Alkohole mit 1 bis 4 C-Atomen so lange behandelt, bis mindestens 60 % des in dem Hydrosol enthaltenen Wassers extrahiert ist. Dann wird das entwässerte und mit der alkoholischen Flüssigkeit behandelte Hydrogel so lange getrocknet, bis bei Temperaturen von > 160°C unter Anwendung eines inerten Schleppgases der Restalkoholgehalt unter 10 Gew.-% liegt.

Das so gewonnene Xerogel wird dann aus einer 0,05 bis 5 Gew.-%-igen Lösung von Chromtrioxid in einem Keton mit 3 bis 5 C-Atomen oder aus einer 0,05 bis 15 Gew.-%-igen Lösung einer unter den Bedingungen der Calcinierung in Chromtrioxid übergehenden Chromverbindung in einem Alkohol mit 1 bis 4 C-Atomen mit Chrom beladen und anschließend wird das Lösungsmittel im Vakuum verdampft.

Zum Calcinieren wird das mit Chrom beladene oxidische Trägermaterial in einem wasserfreien Gasstrom, der Sauerstoff enthält, über eine Zeitdauer von 10 bis 1000 min auf einer Temperatur im Bereich von 300 bis 1100°C gehalten.

Die erfindungsgemäße Zerkleinerung des oxidischen Trägermaterials oder des wie vorstehend beschrieben gewonnenen Katalysatormaterials erfolgt durch trockenes Mahlen mit einer Kugelmühle oder in einer Fächerschlägermühle, wie sie beispielsweise in der DE-A 36 40 802 beschrieben ist. Durch Probenahmen in bestimmten Zeitabständen bestimmt sich die Zeitdauer für das Mahlen, die notwendig ist, um die gewünschte Korngröße zu erreichen.

Bei der Olefinpolymerisation, bei der der erfindungsgemäß hergestellte Katalysator eingesetzt wird, können Homopolymere von Ethylen oder Copolymere von Ethylen mit einem Comonomer mit 3 bis 12 C-Atome in einer Menge von bis zu 10 Gew.-% Comonomer hergestellt werden. Die Polymerisation selbst wird bei Temperaturen im Bereich von 30 bis 150°C unter einem Druck im Bereich von 0,2 bis 15 MPa durchgeführt.

Überraschend wurde gefunden, dass bei konstantem Reaktorausstoß durch die erfindungsgemäß eingeführten Phillips-Katalysatoren mit einer Korngröße von < 100 µm die durchschnittliche Verweilzeit des Katalysators im Reaktor ansteigt und dass gleichzeitig die Katalysatorproduktivität zunimmt. Die höhere Katalysatorproduktivität resultiert vermutlich daraus, dass sich mit den erfindungsgemäß hergestellten Katalysatoren deutlich höhere Polyethyen-Feststoffkonzentrationen im Loop-Fällungs-Verfahren, besonders in Loop-Reaktoren, realisieren lassen als mit den in der Literatur beschriebenen Katalysatoren, die üblicherweise Korngrößen von > 100 µm besitzen. Weiterhin überraschend wurde gefunden, dass sich mit den erfindungsgemäß hergestellten Phillips-Katalysatoren bezüglich der Morphologie des damit hergestellten Polyethylens vergleichbare Ergebnisse erzielen lassen wie mit den herkömmlichen Katalysatoren mit Korngrößen von > 100 µm.

Das erfindungsgemäße Verfahren liefert besonders optimale Resultate, wenn der Partikelanteil mit einer Korngröße von < 50 µm im Bereich von 40 bis 80 % liegt.

Im Rahmen der vorliegenden Erfindung wurden alle Angaben zur Korngröße im Einklang mit der DIN 53 477, Siebanalyse, bestimmt.

Wie die nachstehend beschriebenen Ausführungsbeispiele und die Vergleichsbeispiele zeigen, kommt es bei den in der Literatur beschriebenen Katalysatoren bereits bei relativ niedrigen PE-Feststoffgehalten oberhalb 40 Gew.-% zur Bildung von Reaktorwandbelägen, während die erfindungsgemäß hergestellten Katalysatoren Feststoffgehalte von ca. 60 % ohne Reaktorfouling in Loop-Reaktoren ermöglichen.

### Herstellung des oxidischen Trägermaterials:

### Beispiel 1 (erfindungsgemäß)

Die Herstellung des Katalysatorträgers erfolgte wie in der DE-A 36 40 802 beschrieben mit der Ausnahme, dass die getrockneten Xerogelkugeln mit Hilfe einer Fächerschlägermühle auf eine mittlere Korngröße im Bereich von 1 bis 100 µm gemahlen und gesiebt wurden, wobei der Partikelanteil mit einer Korngröße von < 50 µm 80 % betrug.

### Beispiel 2 (erfindungsgemäß)

Die Herstellung des Katalysatorträgers erfolgte wie im Beispiel 1, mit der Ausnahme, dass der Partikelanteil mit einer Korngröße von < 50 µm nur 30 % betrug.

### Beispiel 3 (Vergleichsbeispiel)

Die Herstellung des Katalysatorträgers erfolgte wie im Beispiel 1, mit der Ausnahme, dass der Partikelanteil mit einer Korngröße von < 50 µm nur 15 % betrug.

### Beispiel 4 (Vergleichsbeispiel)

Die Herstellung des Katalysators erfolgte wie in Beispiel 1 gemäß DE-A 36 40 802 (Seite 7, Zeile 15). Die Trägerteilchen hatten eine mittlere Korngröße im Bereich von 50 bis 100 µm (Seite 8, Zeile 26).

### Beispiel 5 (Vergleichsbeispiel)

Die Herstellung des Katalysators erfolgte wie im Vergleichsversuch 1 gemäß DE-A 36 40 802 (Seite 9, Zeile 16). Die Trägerteilchen hatten eine mittlere Korngröße im Bereich von 1 bis 300 µm.

### Herstellung der Katalysatoren 1 - 4:

### Katalysator 1

Die Herstellung des Katalysators 1 erfolgte gemäß Beispiel 1 der DE-A 36 40 802 (Seite 8, Zeile 31), mit der Ausnahme, dass 15 kg des oxidischen Trägermaterials aus Beispiel 1 eingesetzt wurden.

### Katalysator 2

Die Herstellung des Katalysators 2 erfolgte gemäß Beispiel 1 der DE-A 36 40 802 (Seite 8, Zeile 31), mit der Ausnahme, dass 15 kg des oxidischen Trägermaterials aus Beispiel 2 eingesetzt wurden.

### Vergleichskatalysator 3

Die Herstellung des Vergleichskatalysators 3 erfolgte gemäß Beispiel 1 der DE-A 36 40 802 (Seite 8, Zeile 31), mit der Ausnahme, dass 15 kg des oxidischen Trägermaterials aus Beispiel 3 eingesetzt wurden.

### Vergleichskatalysator 4

Die Herstellung des Vergleichskatalysators 4 erfolgte gemäß Beispiel 1 der DE-A 36 40 802 (Seite 8, Zeile 31), wobei 15 kg des oxidischen Trägermaterials aus Beispiel 4, wie in der DE-A 36 40 802 beschrieben, eingesetzt wurden.

### Vergleichskatalysator 5

Die Herstellung des Vergleichskatalysators 5 erfolgte gemäß Beispiel 1 der DE-A 36 40 802 (Seite 8, Zeile 31), wobei 15 kg des oxidischen Trägermaterials aus Beispiel 5, wie in der DE-A 36 40 802 beschrieben, eingesetzt wurden.

### Polymerisation:

Für die Polymerisation von Ethylen wurde ein üblicher und bekannter Schleifenreaktor verwendet, dessen Reaktionsraum aus einem Rohrkreis von 6 m³ Inhalt bestand. Der Reaktionsraum enthielt bei einem Druck von 4,0 MPa eine Suspension aus flüssigem i-Butan, Polyethylenfeststoff, 6 Gew.-% gelöstem Ethen und 0,4 Gew.-% gelöstem Hexen-1. Die Polymerisationstemperatur betrug 103,5 bis 103, 8°C.

Die Suspension wurde durch eine Propellerpumpe mit 3000 Upm umgepumpt. Bei konstantem Reaktorausstoß von 900 kg PE/h wurde versucht, den Polyethylen-Feststoffanteil in der Suspension möglichst hoch einzustellen. Die realisierbaren PE-Feststoffanteile wurden limitiert durch auftretendes Reaktorfouling (Belagsbildung an den Reaktorwänden oder Störungen an der Leistungsaufnahme der Propellerpumpe).

Die nachfolgende Tabelle zeigt die mit den Katalysatoren 1 bis 5 erzielten Ergebnisse:

| | Kat.1 | Kat. 2 | Kat. 3 | Kat. 4 | Kat. 5 |
|---|---|---|---|---|---|
| Max. PE-Feststoffanteil im Reaktor (Gew.-%) | 58 | 56 | 40 | 38 | 39 |
| Katalysatorproduktivität (kg PE / kg Kat.) | 12450 | 11750 | 6950 | 7200 | 6650 |
| Schmelzindex HLMI 190°C / 21,6 kp nach DIN 53735 (g / 10min) | 6,2 | 6,4 | 6,5 | 6,2 | 6,4 |
| Schüttdichte nach DIN 53468 (g/l) | 500 | 500 | 490 | 500 | 480 |
| Siebanafyse nach DIN 53477 | 0,5 | 0,6 | 0,4 | 0,4 | 0,6 |
| < 125 µm (%) > 2000 µm (%) | 0,2 | 0,3 | 0,2 | 0 | 0,5 |

Mit den erfindungsgemäßen Katalysatoren lassen sich signifikant höhere PE-Feststoffanteile im Loop-Reaktor realisieren, wodurch die Katalysatorproduktivitäten deutlich zunehmen. Bei den Vergleichskatalysatoren 3 bis 5 scheiterten die Versuche, die PE-Feststoffanteile auf mehr als 40 Gew.-% anzuheben, an Reaktorfouling.

Die Polyethylen-Schüttdichte und der Fein- bzw. Grobkornanteil (< 125 µm, > 2000 µm) sind bei den erfindungsgemäßen Beispielen praktisch unverändert und auf demselben Niveau wie in den vergleichsbeispielen.

## Patentansprüche

1. Verfahren zum Herstellen von Phillips-Katalysatoren, bei dem ein Silicagel in einer Suspension mit einer Chromsalzlösung behandelt und anschließend, nach Entfernung des Lösungsmittels, in einer sauerstoffhaltigen Atmosphäre bei Temperaturen oberhalb 300 °C calciniert wird, **dadurch gekennzeichnet, dass** das Silicagel vor dem Calcinieren und/oder der Katalysator nach dem Calcinieren so lange zerkleinert wird, bis eine mittlere Korngröße von < 100 µm erreicht ist, wobei der Partikelanteil mit einer Korngröße von < 50 µm im Bereich von 30 bis 80 % liegt.

2. Verfahren nach Anspruch 1, **dadurch gekennzeichnet, dass** das Silicagel mit einer organischen Flüssigkeit aus der Reihe der Alkohole mit 1 bis 4 C-Atomen so lange behandelt wird, bis mindestens 60 % des in dem Hydrosol enthaltenen Wassers extrahiert ist, und dass dann das entwässerte und mit der alkoholischen Flüssigkeit behandelte Hydrogel so lange bei Temperaturen von > 160 °C unter Anwendung eines inerten Schleppgasesgetrocknet wird, bis der Restalkoholgehalt unter 10 Gew.-% liegt.

3. Verfahren nach Anspruch 2, **dadurch gekennzeichnet, dass** das getrocknete Silicagel aus einer 0,05 bis 5 Gew.-%-igen Lösung von Chromtrioxid in einem Keton mit 3 bis 5 C-Atomen oder aus einer 0,05 bis 15 Gew.-%-igen Lösung einer unter den Bedingungen der Calcinierung in Chromtrioxid übergehenden Chromverbindung in einem Alkohol mit 1 bis 4 C-Atomen mit Chrom beladen und anschließend das Lösungsmittel im Vakuum verdampft wird.

4. Verfahren nach einem der Ansprüche 1 bis 3, **dadurch gekennzeichnet, dass** das Calcinieren des mit Chrom beladenen Silicagel in einem wasserfreien Gasstrom, der Sauerstoff in einer Menge von wenigstens 10 Vol.-% enthält, über eine Zeitdauer von 10 bis 1000 min bei einer Temperatur im Bereich von 300 bis 1100 °C durchgeführt wird.

5. Verfahren nach einem der Ansprüche 1 bis 4, **dadurch gekennzeichnet, dass** die Zerkleinerung des Silicagel und/oder des nach dem Calzinieren gewonnenen Katalysatormaterials durch trockenes Mahlen mit einer Kugelmühle oder in einer Fächerschlägermühle erfolgt.

6. Verfahren zur Olefinpolymerisation bei dem Homopolymere von Ethylen oder Copolymere von Ethylen und einem Comonomer mit 3 bis 12 C-Atomen in einer Menge von bis zu 10 Gew.-% Comonomer hergestellt werden, **dadurch gekennzeichnet, dass** die Polymerisation in Gegenwart eines Phillips-Katalysators hergestellt nach einem Verfahren der Ansprüche 1 bis 5 bei Temperaturen im Bereich von 30 bis 150 °C unter einem Druck im Bereich von 0,2 bis 15 MPa durchgeführt wird.

7. Verfahren nach Anspruch 6, **dadurch gekennzeichnet, dass** die Polymerisation. als Fällungspolymerisation in einem Loop-Reaktor durchgeführt wird.

## Claims

1. A process for producing Phillips catalysts in which a silica gel is treated in suspension with a chromium salt solution and subsequently, after removing the solvent, calcined in an oxygen-containing atmosphere at above 300°C, wherein the silica gel before calcination and/or the catalyst after calcination are/is comminuted until a mean particle size of < 100 µm has been reached and the proportion of particles having a size of < 50 µm is in the range from 30% to 80.

2. A process as claimed in claim 1, wherein the silica gel is treated with an organic liquid selected from among alcohols having from 1 to 4 carbon atoms until at least 60% of the water present in the hydrosol has been extracted, and the dewatered hydrogel which has been treated with the alcoholic liquid is then dried at > 160°C using an inert carrier gas until the residual alcohol content is less than 10% by weight.

3. A process as claimed in claim 2, wherein the dried silica gel is loaded with chromium from a 0.05-5% strength by weight solution of chromium trioxide in a ketone having from 3 to 5 carbon atoms or from a 0.05-15% strength by weight solution of a chromium compound which is converted into chromium trioxide under the conditions of the calcination in an alcohol having from 1 to 4 carbon atoms and the solvent is subsequently evaporated under reduced pressure.

4. A process as claimed in any of claims 1 to 3, wherein the calcination of the chromium-laden silica gel is carried out in a water-free gas stream containing at least 10% by volume of oxygen for from 10 to 1000 min at from 300 to 1100°C.

5. A process as claimed in any of claims 1 to 4, wherein the comminution of the silica gel and/or of the catalyst material obtained after calcination is carried out by dry milling using a ball mill or in a beater mill.

6. A process for olefin polymerization in which homopolymers of ethylene or copolymers of ethylene and a comonomer having from 3 to 12 carbon atoms in an amount of up to 10% by weight of comonomer are prepared, wherein the polymerization is carried out in the presence of a Phillips catalyst produced by a process as claimed in any of claims 1 to 5 at from 30 to 150°C under a pressure in the range from 0.2 to 15 MPa.

7. A process as claimed in claim 6, wherein the polymerization is carried out as a precipitation polymerization in a loop reactor.

## Revendications

1. Procédé pour la préparation de catalyseurs de Phillips dans lequel on traite un gel de silice en suspension par une solution de sel de chrome puis, après élimination du solvant, on le calcine en atmosphère contenant de l'oxygène à des températures supérieures à 300°C, **caractérisé en ce que** l'on broie le gel de silice avant la calcination et/ou le catalyseur après la calcination jusqu'à une dimension moyenne de grain inférieure à 100 µm avec 30 à 80% de particules à une dimension de grain inférieure à 50 µm.

2. Procédé selon la revendication 1, **caractérisé en ce que** le gel de silice est traité par un liquide organique choisi parmi les alcools en C1-C4 jusqu'à extraction d'au moins 60% de l'eau contenue dans l'hydrosol et **en ce que** l'hydrogel déshydraté et traité par le liquide alcoolique est séché à des températures supérieures à 160°C sous entraînement par un gaz inerte jusqu'à ce que la teneur résiduelle en alcool soit inférieure à 10%.

3. Procédé selon la revendication 2, **caractérisé en ce que** le gel de silice séché est chargé en chrome à l'aide d'une solution de 0,05 à 5% en poids de trioxyde de chrome dans une cétone en C3-C5 ou d'une solution à 0,05 à 15% en poids d'un composé du chrome converti en trioxyde de chrome dans les conditions de la calcination dans un alcool en C1-C4, après quoi le solvant est vaporisé sous vide.

4. Procédé selon l'une des revendications 1 à 3, **caractérisé en ce que** la calcination du gel de silice chargé de chrome est réalisée dans un courant gazeux sec contenant de l'oxygène en quantité d'au moins 10% en volume, en une durée de 10 à 1000 minutes et à une température dans l'intervalle de 300 à 1100°C.

5. Procédé selon l'une des revendications 1 à 4, **caractérisé en ce que** le broyage du gel de silice et/ou du catalyseur obtenu après calcination est réalisé par broyage à sec au broyeur à boulets ou dans un broyeur à marteaux en éventail.

6. Procédé pour la polymérisation d'oléfines pour préparation d'homopolymères de l'éthylène ou de copolymères de l'éthylène et d'un comonomère en C3-C12, la proportion de ce dernier pouvant aller jusqu'à 10% en poids, **caractérisé en ce que** la polymérisation est réalisée en présence d'un catalyseur de Phillips préparé par un procédé selon les revendications 1 à 5 à des températures dans l'intervalle de 30 à 150°C sous une pression dans l'intervalle de 0,2 à 15 MPa.

7. Procédé selon la revendication 6, **caractérisé en ce que** la polymérisation est réalisée sous la forme d'une polymérisation avec précipitation dans un réacteur à circulation.
